# FASCICULE DE BREVET EUROPEEN

(11) **EP 1 461 942 B1**
(45) Date de publication et mention de la délivrance du brevet: **25.04.2012**
(21) Numéro de dépôt: 02799121.5
(22) Date de dépôt: 27.12.2002
(51) Int. Cl.: H04N 5/232

(54) **SYSTEME DE SUIVI DE MOBILES EN TEMPS REEL SUR UN TERRAIN DE SPORT**
VORRICHTUNG ZUR VERFOLGUNG VON BEWEGLICHEN OBJEKTEN AUF EINEM SPORTFELD IN ECHTZEIT
SYSTEM FOR REAL-TIME MONITORING OF MOBILE OBJECTS ON A PLAYING FIELD

(30) Priorité: 27.12.2001 FR 0116938
(43) Date de publication de la demande: 29.09.2004
(73) Titulaire: S.U.P. SA, 69390 Millery (FR)
(72) Inventeur: GIORGI, Jean-Marc, 06000 Nice (FR); DAVID, Antoine, 06100 Nice (FR)
(74) Mandataire: de Zeeuw, Johan Diederick
(86) Numéro de dépôt international: PCT/FR2002/004570
(87) Numéro de publication internationale: WO 2003/056809

(56) Documents cités:
- EP-A- 0 847 201
- WO-A-00/08856
- WO-A-00/31560
- WO-A-95/10915

## Description

### Domaine technique

La présente invention concerne l'acquisition des données en temps réel concernant les déplacements des mobiles se trouvant sur un espace clos, notamment le déplacement des joueurs sur un terrain de football, et en particulier un système de suivi de mobiles sur le terrain dans le cas où il y aurait concentration de joueurs sur une zone de surface restreinte.

### Etat de la technique

D'une manière générale, les systèmes d'observation et de traitement existants concernant l'analyse des sports collectifs sont peu satisfaisants soit par la pauvreté des informations qu'ils sont capables de traiter, soit par leur imprécision, soit par leur manque de robustesse, soit par leur difficulté de mise en place.

Par conséquent, ces systèmes n'arrivent pas à offrir un suivi à chaque instant des positions des différents mobiles sans risque de confusion ou de mauvaise identification de ces derniers ou sans mettre en place un dispositif susceptible de modifier les conditions de compétition réelles (Capteur, récepteur...).

L'acquisition de données concernant le déplacement des mobiles sur un terrain de jeu pose le problème du calcul de la position exacte de chaque mobile (Joueur, ballon...) à chaque instant avec le plus de précision possible et en minimisant le risque de confusion entre les joueurs. On connaît dans l'état de la technique plusieurs systèmes et procédés ayant l'ambition d'observer, d'analyser et de traiter les informations relatives aux déplacements des joueurs en sports collectifs.

La plupart de systèmes existants sont des systèmes très rudimentaires qui se présentent sous la forme de clavier de saisie d'un certain nombre d'informations concernant l'observation et l'analyse des sports collectifs. Ces dispositifs sont gérés par des opérateurs manuels. Certains sont dédiés à des opérations de comptage et ne servent qu'à la capture et à la gestion de données de type "événement" (Passe, dribble, tir...) sans pouvoir prétendre analyser le déplacement des différents acteurs observés. Leur précision est liée à la rapidité et à la précision d'exécution du ou des opérateurs chargés de la saisie des données. La mise en oeuvre de tels systèmes en temps réel est assez contraignante et nécessite souvent d'y affecter plusieurs opérateurs de saisie.

D'autres systèmes, basés sur le même principe, ont la prétention de traiter et de quantifier le déplacement des différents acteurs de la scène analysée, Ils font tous appel à des opérateurs humains qui pointent manuellement, sur une représentation graphique du terrain ou bien sur des séquences numérisées, à partir de claviers ergonomiques, de grilles magnétiques ou d'écrans tactiles, les positions successives des mobiles participant à l'événement analysé. Les aléas de la fréquence de pointage et l'approximation de la position exacte générée par l'action des différents opérateurs ne permettent pas d'extraire des informations précises sur la position exacte et donc la trajectoire réelle et la vitesse instantanée du joueur. Ces systèmes ne permettent donc pas une analyse précise ni une modélisation fidèle de l'action effective du joueur en termes de quantité et de qualité de déplacement. De plus, ces systèmes ne sont pas adaptables aux contraintes de performance que requière l'analyse de ces paramètres dans l'objectif d'un traitement en temps réel.

De manière plus spécifique, on connaît dans l'état de la technique, des systèmes et dispositifs d'acquisition de position des mobiles à partir des sources vidéo dans des contextes de sports et en particulier de sports collectifs.

Cependant bien que prétendant pouvoir être adaptés à des situations d'analyse et de traitement en temps réel, ces systèmes ne sont généralement pas adaptables aux exigences de rapidité que nécessite cette contrainte. Ils ont besoin de faire appel à plusieurs opérateurs humains et leur temps de réponse est souvent trop long pour pouvoir prétendre à une analyse fiable et performante et continue d'un événement de sports collectifs en temps réel. De plus, leur méthode d'analyse d'image se base la plupart du temps sur une soustraction de l'image de référence et une analyse des différences d'images trames à trames. Or, l'état de l'art dans le domaine du traitement de l'image a prouvé que ces méthodes sont très limitées en ce qui concerne la faculté de détection et la précision de la détection des différents mobiles. Les résultats fournis ne correspondent pas à la précision demandée par l'analyse fine que requiert l'étude des déplacements des mobiles dans les sports collectifs.

Selon l'état de la technique, les échecs ou le manque de précision des méthodes de traitement d'images présentées dans ces systèmes sont dues aux raisons suivantes :
1) Systèmes basés sur l'analyse des différences trame à trame ou sur des différences d'images par rapport au fond. L'état de l'art a prouvé que les systèmes à différence d'images échouent quand les caractéristiques du fond ne sont pas strictement constantes et quand les cibles n'ont pas de frontières rigides, et souffrent lors de poursuites multi-cibles.
2) Systèmes basés sur la mise en correspondance d'éléments structurants des images (Contours, régions, histogrammes, polygones...). Les systèmes de mise en correspondance d'éléments structurants sont sensibles aux variations dans la structure spatiale des cibles, et échouent en présence de difficultés comme les occlusions.
3) Systèmes qui considèrent un schéma général de calcul du mouvement à partir de séquences d'images. Les problèmes de ces systèmes sont issus de l'énorme quantité de calculs qu'ils nécessitent et qui sont loin d'atteindre une performance temps réel.

On connaît aussi dans l'état de la technique, des systèmes alliant aux moyens d'acquisition vidéo, des moyens d'acquisition de positions des mobiles : goniométrie, systèmes de positionnement global (gps...). Ces systèmes sont généralement très lourds à mettre en oeuvre et imposent le port d'un équipement particulier par les joueurs. Ils apportent généralement des modifications aux situations de compétition et ne s'accommodent pas des conditions habituelles et diverses de ces situations, en particulier quant au lieu ou elles se déroulent.

Un système qui résout partiellement les problèmes énoncés ci-dessus est décrit dans la demande de brevet européen 97480088.0 publiée sous le numéro EP-A-847201. Ce système utilise des caméras vidéo analogiques ou numériques motorisées, automatiquement asservies à un moteur intelligent de production de trajectoires, qui, par un mécanisme de requêtes/réponses, va utiliser les possibilités de commande de cadrage de ces caméras asservies, pour aller lever les ambiguïtés et pertes d'identification, au cours du suivi des mobiles. Cependant, ce système ne résout pas entièrement le problème posé par les occlusions qui se produisent lorsque plusieurs joueurs sont concentrés sur une surface réduite du terrain et que pose le problème de l'identification des joueurs du fait que ceux-ci passent les uns devant les autres et se confondent sur l'image.

### Exposé de l'invention

C'est pourquoi, un but de l'invention est de fournir un système de suivi automatique de mobiles utilisant des caméras vidéo analogiques ou numériques motorisées qui soit capable d'effectuer le suivi de chaque mobile sur le terrain lorsque survient un point de concentration de plusieurs mobiles sur une surface restreinte.

Un autre but de l'invention est de fournir un système de suivi automatique de mobiles, notamment de joueurs sur un terrain de sport, permettant une prévision des points de concentration ou « rendez-vous » entre plusieurs mobiles et leur analyse par des caméras motorisées.

L'objet de l'invention est donc un système de suivi automatique de mobiles en temps réel sur un espace clos, tel que défini dans la revendication 1.

### Description brève des figures

Les buts, objets et caractéristiques de l'invention apparaîtront plus clairement à la lecture de la description suivante faite en référence aux dessins dans lesquels :
La figure 1 est un bloc-diagramme représentant un terrain de sport disposant d'un système de suivi automatique des joueurs selon un mode de réalisation préféré de l'invention,
Les figures 2A et 2B sont des schémas synoptiques fonctionnels illustrant les étapes mises en oeuvre ainsi que les modules du système selon l'invention impliqués lorsque se produit un point de concentration entre plusieurs joueurs.

### Description détaillée de l'invention

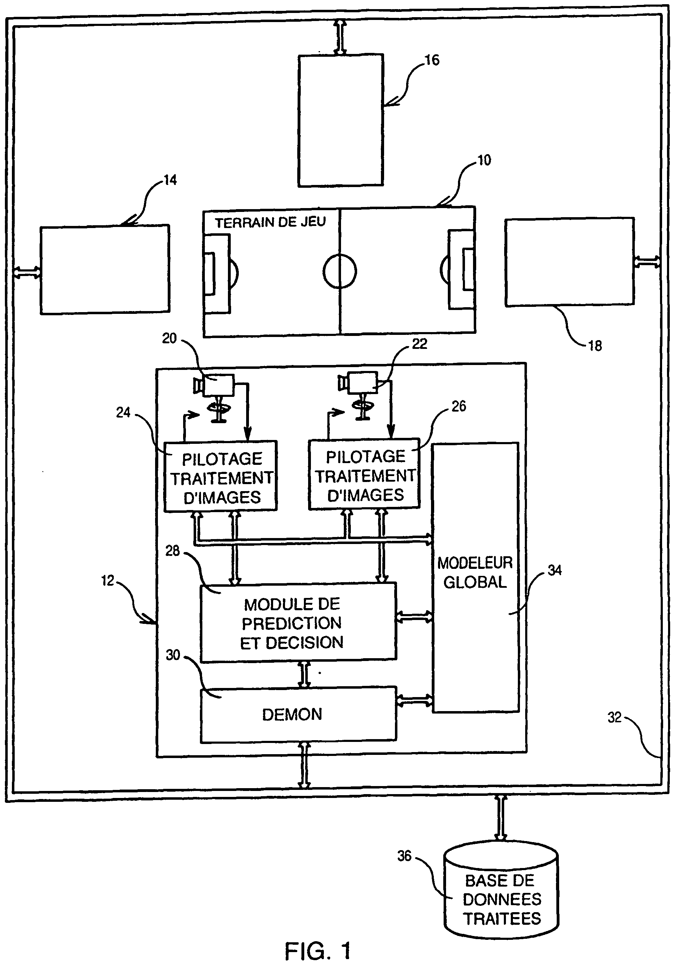

Le système de suivi automatique de mobiles selon l'invention illustré sur la figure 1 comprend une pluralité de capteurs multipolaires disposés autour d'un terrain de jeu, tel qu'un terrain de football. En l'occurrence, l'exemple illustré comporte 4 capteurs multipolaires 12, 14, 16 et 18.

Chaque capteur multipolaire illustré pour le capteur 12, comprend une caméra de surveillance 20 et une ou plusieurs caméras d'aide telles que la caméra 22 du capteur multipolaire 12. Les caméras sont contrôlées directement par une unité de pilotage et de traitement d'images 24 ou 26 associée respectivement à la caméra 20 ou 22 sur la figure 1. L'unité de pilotage et de traitement d'images est en fait composée de plusieurs modules. Un module de pilotage-calibrage a pour fonction d'opérer la commande des actionneurs de la caméra (par exemple du zoom) et de mettre à jour les paramètres de positionnement de zoom. Un module d'acquisition et de traitement d'images a pour fonction d'acquérir les images numériques formées, d'analyser les formes élémentaires, et de mettre à jour les paramètres d'acquisition et de traitement d'images en fonction des modifications perçues et des conditions de prises de vues (éclairement, ombres, météo...). Un module de suivi des mobiles et objets (non mobiles) met en oeuvre un algorithme de ré-identification en utilisant une table des mobiles à ré-identifier. Enfin, un logiciel de calibrage dynamique distribué effectue l'ordonnancement des traitements préventifs et la gestion des priorités et des actions à mener par la caméra mobile. Pour cela, il mémorise les paramètres de positionnement des capteurs (visée, focale), l'état du suivi et de l'analyse du mouvement de toutes les cibles, et la prévision de la caméra en termes de localisation spatiale et temporelle des zones à risque ainsi que les acteurs impliqués.

Les unités de pilotage et de traitement d'images associées à chaque caméra du capteur multipolaire sont reliées à un module de prédiction et décision 28 dont la fonction est de détecter les risques de situation conflictuelle basées sur l'analyse des cibles en cours, de leur configuration spatio-temporelle et des capacités de réaction de la caméra mobile. Il effectue une évaluation des traitements préventifs possibles de façon à faire un choix du meilleur traitement préventif bien que la caméra conserve le choix du type d'analyse préventive qu'elle va effectuer.

Le module de prédiction et décision 28 est relié à un démon 30 qui est un logiciel distribué entre tous les capteurs multipolaires comme on le verra par la suite, et qui tient à jour une table des cibles en cours.

On doit noter que le modèle de prédiction et décision 28 et le démon 30 sont des logiciels s'exécutant sur une unité de traitement ou microprocesseur faisant partie intégrante du capteur multipolaire.

Les unités de pilotage et traitement d'images 24 et 26, le module de prédiction et décision 28 et le démon 30 sont reliés à un modeleur global 34 identique pour tous les capteurs multipolaires. Le modeleur global est composé d'un ensemble de bases de données, notamment une base de critères de prédiction des points de concentration ou occlusions et une base de critères et actions des traitements préventifs, et d'un ensemble de logiciels mathématiques de modélisation des caméras et un logiciel de paramétrage de la scène visionnée de façon à générer (sous la forme de fichiers partagés par les capteurs multipolaires) les descriptions de tous les objets (mobiles et statiques) et de tous les évènements de la scène ainsi que des règles du jeu.

Les capteurs multipolaires 12, 14, 16 et 18 sont reliés entre eux par l'intermédiaire d'un réseau haut débit 32 (par exemple 10 Mbits) tel qu'un réseau LAN du type Ethernet (marque déposée), auquel est reliée une base de données 36 servant à emmagasiner les fichiers générés par le modeleur global 34 ainsi que les données de reconstruction

Le démon 30 relié directement au réseau haut débit 32 est un logiciel distribué qui est identique dans chaque capteur multipolaire. Toutes les données acquises par un démon à partir du capteur multipolaire dans lequel il se trouve sont transmises immédiatement aux autres démons. Ainsi, les données acquises par le démon 30 du capteur multipolaire 12 à partir des caméras 20 et 22 sont envoyées immédiatement aux démons associés aux capteurs multipolaires 14, 16 et 18.

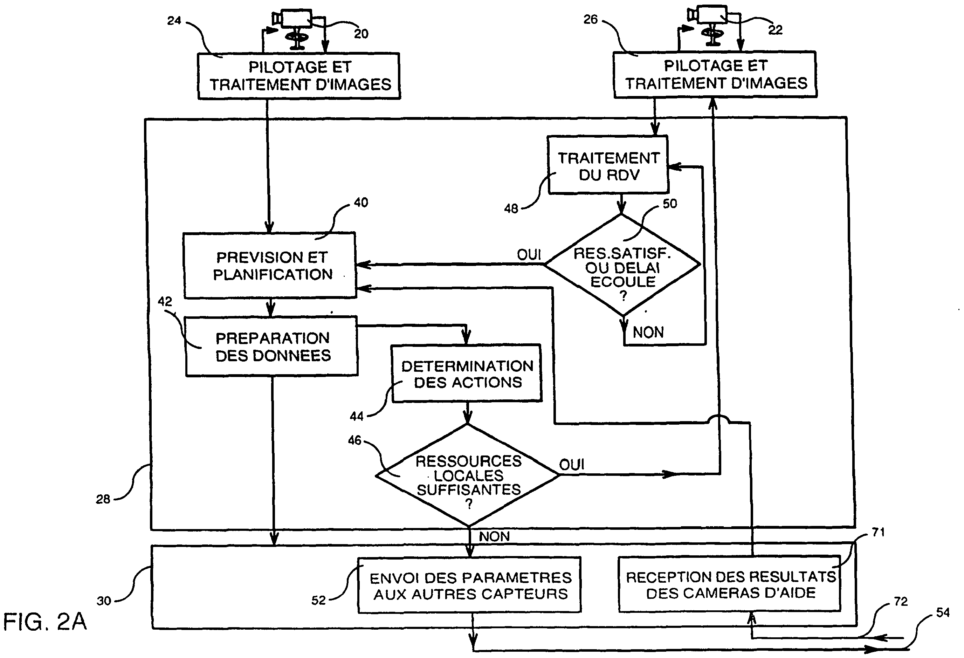

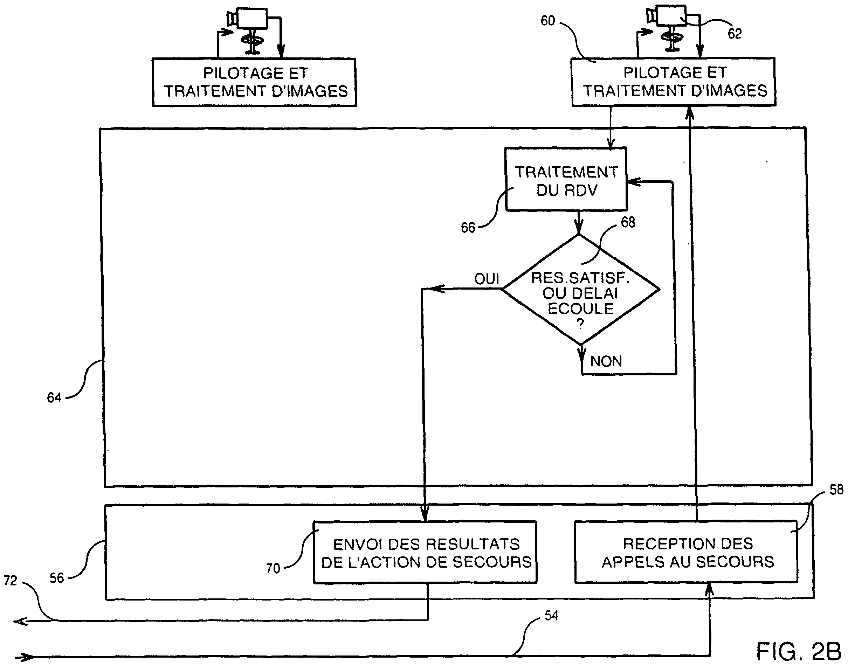

Un exemple de fonctionnement du système est décrit ci-dessous en référence aux figures 2A et 2B qui représentent respectivement et de façon détaillée les actions prises par la caméra de surveillance 20 du capteur multipolaire 12 et les actions demandées à une caméra d'aide d'un autre capteur multipolaire par l'intermédiaire du module de prédiction et décision associé et des démons des deux capteurs multipolaires impliqués.

De façon générale, les caméras de surveillance, au nombre de 4 dans l'exemple illustré par la figure 1, ont pour mission de couvrir tout le terrain de jeu. En conséquence, elles sont normalement en position "grand angle » bien qu'on puisse réduire l'angle de prise de vue par l'effet de zoom. Les images prises par la caméra 20 sont d'abord traitées par l'unité de pilotage et traitement d'image 24. Les données numériques qui en résultent sont transmises, dans le module de prédiction et décision 28, au module de prévision et de planification 40. Puis elles sont transmises au bloc 42 de préparation des données avant d'être fournies au démon 30 qui les transmet immédiatement aux démons des autres capteurs multipolaires comme mentionné précédemment.

Supposons que le module 40 d'analyse des données et prédiction de la situation détecte qu'il va y avoir un point de concentration de joueurs (quelquefois appelé occlusion) donnant lieu à un futur « rendez-vous » (RDV). Dans ce cas, les données prédisant la situation future sont fournies par le module 40 au bloc 44 de détermination des actions. Le bloc 44 détermine si les ressources locales sont suffisantes (bloc 46) c'est à dire si la caméra d'aide 26 du capteur multipolaire peut traiter le RDV. C'est le cas si elle n'est pas obligée d'arrêter les analyses en cours concernant les autres mobiles. Il en est ainsi lorsque, en s'appuyant sur la modélisation 3D des mouvements des corps des acteurs impliqués dans la situation conflictuelle, il n'y a aucun doute sur l'identification et la position des joueurs à la fin de l'incident ou lorsque la caméra peut ajuster son cadrage à l'avance pour avoir un point de vue optimal au moment où la concentration va apparaître. Dans ce cas, la commande de prise en charge est transmise à la caméra 22 par l'intermédiaire de l'unité de pilotage et traitement d'images 26. La caméra d'aide 22 se met alors en mode de traitement du RDV 48 et tente d'identifier les acteurs se trouvant sur le lieu du RDV. Au fur et à mesure du traitement, les résultats sont transmis au module 40 d'analyse des données et prédiction de la situation de façon à mettre à jour la situation présente et les actions à planifier. Comme illustré sur la figure, un test 50 détermine si les résultats sont satisfaisants ou si un délai donné (temps au bout duquel il est peu vraisemblable qu'il y ait encore RDV) s'est écoulé. Tant que ce n'est pas le cas, le traitement est poursuivi. On doit noter que l'essentiel du traitement effectué est en mode « photo » de manière à identifier à la volée le numéro de maillot des acteurs impliqués, avant, pendant et après le RDV.

Dans un deuxième cas, le capteur multipolaire est le mieux placé pour résoudre le problème, mais ne dispose pas de ressources suffisantes pour s'occuper du point de concentration en faisant appel aux seules caméras d'aide du capteur multipolaire. C'est le cas lorsque le capteur multipolaire ne peut résoudre le problème sans perdre les analyses qu'il a en cours sur les joueurs non impliqués dans le problème prévu (par exemple la ou les caméras d'aide du capteur sont occupées ou seront occupées pour un prochain RDV). Un appel au « secours » est alors transmis aux autres capteurs multipolaires par l'intermédiaire du démon. En réalité cet appel au « secours » n'est pas véritablement un appel dans la mesure où c'est simplement un envoi de paramètres qui est effectué sur la ligne 54 à partir du démon 30 à destination de tous les autres démons. Les paramètres vont alors permettre aux caméras d'aide les plus disponibles et/ou les mieux placées pour se repartir l'ensemble de la zone à recouvrir ainsi que les analyses des mobiles qui ne sont plus suivis par les caméras d'aide du capteur. Celles-ci, qui deviennent libres, se focalisent alors sur le point de concentration prédit.

Dans un troisième cas, le capteur multipolaire estime qu'il n'a pas les ressources nécessaires pour résoudre le problème avec les seules caméras d'aide du capteur, que celui-ci soit déjà occupé ou non à régler d'autres points de concentration. Ce troisième cas est traité de la même façon que le deuxième cas, c'est à dire qu'un envoi de paramètres est effectué sur la ligne 54 à partir du démon 30 à destination de tous les autres démons. Mais dans ce cas, les autres capteurs se répartissent les problèmes à résoudre, y compris le problème détecté par le capteur multipolaire 12

Bien que dans le mode de réalisation préféré, les caméras d'aide les plus à même de traiter l'événement se déterminent elles-mêmes grâce aux informations acquises par les démons, on peut aussi bien envisager que ces caméras d'aide puissent être appelées au secours après analyse de la situation par le module de prédiction et décision du capteur multipolaire demandeur.

En référence à la figure 2B, les paramètres transmis par le démon du capteur multipolaire demandant de l'aide sont reçus par tous les autres démons et en particulier par le démon 56 d'un autre capteur multipolaire 14, 16 ou 18. Le bloc de réception des appels au secours 58 envoie alors les commandes à l'unité de pilotage et de traitement d'images 60 associée si le démon détermine que la (ou les caméras d'aide) 62 peut apporter de l'aide au capteur demandeur parce qu'elle est disponible et qu'elle est la mieux placée. Lorsque c'est le cas, les démons des autres capteurs multipolaires sont avertis immédiatement qu'une caméra d'aide (ou plusieurs caméras) s'est portée à l'aide et ne sollicite donc pas leurs caméras d'aide respectives.

Le déroulement des opérations est alors le même que précédemment, c'est à dire que le module de prédiction et décision 64 associé au démon 56 effectue le traitement 66 du RDV, principalement en mode « photo » comme on l'a vu précédemment, et vérifie continuellement par le test 68 si les résultats sont satisfaisants ou si un délai est écoulé. Si c'est le cas, le module de prédiction et décision 64 envoie alors les résultats par l'intermédiaire du bloc 70 d'envoi des résultats de l'action de secours dans le démon 56 au démon 30 du capteur demandeur (Fig. 2A) au moyen de la ligne 72.

Bien que les caméras de surveillance soient des caméras motorisées donc mobiles, il peut être judicieux d'utiliser également des caméras fixes. Ces dernières permettent de soulager les caméras mobiles des cas triviaux de suivi d'analyse et ainsi de réserver la puissance des caméras mobiles pour la seule prédiction des points de concentration. En couvrant tout le terrain, les caméras fixes construisent les éléments de trajectoires et de modélisation 3D et remplacent les caméras mobiles quand celles-ci sont appelées sur une autre zone.

## Revendications

1. Système de suivi automatique de mobiles en temps réel sur un espace clos, notamment des joueurs évoluant sur un terrain de sport, comprenant un première pluralité de caméras de surveillance (20) couvrant ledit espace clos et permettant des prises de vues desdits mobiles, une seconde pluralité de caméras d'aide (22) destinées à être appelées pour venir en aide à une desdites caméras de surveillance, des moyens d'acquisition en temps réel de données numériques concernant la position instantanée de chacun desdits mobiles, lesdites données étant obtenues à partir des images fournies par ladite première pluralité de caméras de surveillance, et des moyens de détermination (30) pour déterminer au moins une caméra d'aide la mieux placée pour venir en aide à ladite caméra de surveillance;
ledit système étant **caractérisé en ce que** chacune desdites caméras de surveillance (20) est associée à au moins une caméra d'aide (22) dans un capteur multipolaire (12), ledit capteur multipolaire incluant des moyens de prédiction (28) de la survenance d'un point de concentration de plusieurs desdits mobiles sur une surface restreinte dudit espace clos avant que ce point de concentration ne se produise en réponse aux données fournies par au moins une desdites caméras de surveillance (20), lesdits moyens de prédiction (28) comprenant un module de prévision et planification (40) chargé de déterminer s'il va se produire un point de concentration donnant lieu à un futur « rendez-vous », et un module de détermination des actions (44) afin de déterminer si la caméra d'aide (26) du capteur multipolaire (12) est capable de traiter le « rendez-vous », dans lequel la caméra d'aide venant en aide à ladite caméra de surveillance (20) est ladite caméra d'aide associée (22) lorsque ledit capteur multipolaire (12) a les ressources suffisantes pour que au moins une caméra d'aide associée (22) effectue la prise de vues dudit point de concentration déterminé par ledit module de prévision et planification (40) conjointement avec ladite caméra de surveillance, et dans lequel la caméra d'aide venant en aide à ladite caméra de surveillance (20) est au moins une caméra d'aide d'un autre capteur multipolaire (14, 16 ou 18) lorsque les ressources dudit capteur multipolaire (12) sont insuffisantes, pour traiter le « rendez-vous ».

2. Système selon la revendication 1, dans lequel ledit capteur multipolaire (12) fait appel aux caméras d'aide d'un autre capteur multipolaire lorsque ses propres caméras d'aide sont déjà impliquées dans le traitement d'autres points de concentration, les caméras d'aide dudit capteur multipolaire se focalisant sur ledit point de concentration dès que les caméras d'aide dudit autre capteur multipolaire ont pris en charge lesdits autres points de concentration.

3. Système selon l'une des revendications 1 ou 2, dans lequel lesdits capteurs multipolaires (12, 14, 16, 18) sont reliés entre eux par l'intermédiaire d'un réseau haut débit (32) tel qu'un réseau LAN du type Ethernet.

4. Système selon la revendication 3, dans lequel chacun desdits capteurs multipolaires (12, 14, 16, 18) est connecté audit réseau haut débit (32) par l'intermédiaire desdits moyens de détermination ou démon (30), ledit démon étant un logiciel distribué identique aux démons se trouvant dans chacun des autres capteurs multipolaires et qui transmet aux démons des autres capteurs multipolaires les données acquises dans le capteur multipolaire au moyen desdites caméras de surveillance (20) et d'aide (22) associées.

5. Système selon la revendication 4, dans lequel une unité de pilotage et traitement d'images (24 ou 26) est associée à chacune des caméras de surveillance (20) ou d'aide (22) dudit capteur multipolaire dans le but d'opérer la commande des actionneurs de la caméra associée, par exemple le zoom, et d'acquérir les images prises par ladite caméra.

6. Système selon la revendication 5, comprenant en outre un modeleur global (34) relié auxdits moyens de prédiction (28), auxdits moyens de détermination (30) et auxdites unités de pilotage et traitement d'images, ledit modeleur global comprenant une base de critères de prédiction des occlusions et une base de critères et actions des traitements préventifs, ainsi que des logiciels mathématiques de modélisation des caméras et un logiciel de paramétrage de la scène visionnée de façon à générer, sous la forme de fichiers partagés par les capteurs multipolaires, les descriptions de tous les objets, mobiles et statiques, et de tous les évènements de la scène ainsi que des règles du jeu.

7. Système selon la revendication 6, comprenant en outre une
base de données (36) connectée audit réseau haut débit 32), ladite base de données emmagasinant les fichiers générés par ledit modeleur global (34) ainsi que les données de reconstruction.

## Claims

1. A system for automatically tracking mobile objects in real time in an enclosed space, in particular players moving about on a playing field, comprising a first plurality of surveillance cameras (20) which cover said enclosed space and allow snapshots of said mobile objects, a second plurality of auxiliary cameras (22) intended to be called upon to come to the aid of one of said surveillance cameras, means for the real-time gathering of digital data regarding the instantaneous position of each of said mobile objects, said data being obtained from the images provided by said first plurality of surveillance cameras, and determining means (30) for determining at least one auxiliary camera best placed to come to the aid of said surveillance camera;
said system being **characterised in that** each of said surveillance cameras (20) is associated with at least one auxiliary camera (22) in a multipolar sensor (12), said multipolar sensor comprising means for predicting (28) the emergence of a point of concentration of several of said mobile objects on a restricted surface of said enclosed space before this point of concentration occurs in response to the data supplied by at least one of said surveillance cameras (20), said predicting means (28) including a forecasting and planning module (40) responsible for determining if there is going to occur a point of concentration giving rise to a future "meeting", and a module for determining actions (44) in order to determine if the auxiliary camera (26) of the multipolar sensor (12) is capable of processing the "meeting", wherein the auxiliary camera coming to the aid of said surveillance camera (20) is said associated auxiliary camera (22) when said multipolar sensor (12) has sufficient resources for at least one associated auxiliary camera (22) to take the snapshot of said point of concentration determined by said forecasting and planning module (40) jointly with said surveillance camera, and wherein the auxiliary camera coming to the aid of said surveillance camera (20) is at least one auxiliary camera of another multipolar sensor (14, 16 or 18) when the resources of said multipolar sensor (12) are not sufficient to process the "meeting".

2. The system according to claim 1, wherein said multipolar sensor (12) calls on the auxiliary cameras of another multipolar sensor when its own auxiliary cameras are already involved in treating other points of concentration, the auxiliary cameras of said multipolar sensor focussing on said point of concentration from the moment when the auxiliary cameras of said other multipolar sensor have taken on said other points of concentration.

3. The system according to one of claims 1 or 2, wherein said multipolar sensors (12, 14, 16, 18) are connected to one another via a high-speed network (32) such as an Ethernet-type LAN network.

4. The system according to claim 3, wherein each of said multipolar sensors (12, 14, 16, 18) is connected to said high-speed network (32) via said determining means or daemon (30), said daemon being a distributed software identical to the daemons located in each of the other multipolar sensors and which transmits to the daemons of the other multipolar sensors the data gathered in the multipolar sensor by means of said associated surveillance cameras (20) and auxiliary cameras (22).

5. The system according to claim 4, wherein a guiding and image processing unit (24 or 26) is associated with each of the surveillance cameras (20) or auxiliary cameras (22) of said multipolar sensor with the aim of operating the control of the actuators of the the associated camera, for example the zoom, and gathering the images taken by said camera.

6. The system according to claim 5, further comprising a global modeler (34) linked to said predicting means (28), to said determining means (30) and to said guiding and image processing units, said global modeler including a base of criteria for predicting obstructions and a base of criteria and actions for preventative processing, as well as camera modelling mathematical softwares and a software for parametering the viewed scene so as to generate, in the form of files shared by the multipolar sensors, the descriptions of all of the objects, mobile and static, and all the events of the scene as well as the rules of the game.

7. The system according to claim 6, further comprising a database (36) connected to said high-speed network (32), said database storing the files generated by said global modeler (34) as well as the reconstruction data.

## Patentansprüche

1. Ein System zur automatischen Verfolgung von Körpern in Bewegung in Echtzeit in einem eingegrenzten Gebiet, insbesondere von Spielern, die sich auf einem Sportplatz bewegen, wobei das System eine erste Vielzahl von Überwachungskameras (20), die das eingegrenzte Gebiet abdecken und Aufnahmen der Körper in Bewegung ermöglichen, eine zweite Vielzahl von Hilfskameras (22) zum Aufgerufenwerden, um einer der Überwachungskameras zu Hilfe zu kommen, Beschaffungsmittel für numerische Daten, die die momentane Position jedes der Körper in Bewegung betreffen, in Echtzeit, wobei die Daten aus von der ersten Vielzahl von Überwachungskameras bereitgestellten Bildern erhalten werden, und Bestimmungsmittel (30) zum Bestimmen mindestens einer Hilfskamera, die am besten platziert ist, um der Überwachungskamera zu Hilfe zu kommen, umfasst;
wobei das System **dadurch gekennzeichnet ist, dass** jede der Überwachungskameras (20) mit mindestens einer Hilfskamera (22) in einem mehrpoligen Sensor (12) assoziiert ist, wobei der mehrpolige Sensor Voraussagungsmittel (28) für das Auftreten eines Konzentrationspunkts von mehreren der Körper in Bewegung auf einer begrenzten Fläche des eingegrenzten Gebiets, bevor sich dieser Konzentrationspunkt als Reaktion auf die durch mindestens eine der Überwachungskameras (20) bereitgestellten Daten bildet, einschließt, wobei die Voraussagungsmittel (28) ein Prognose- und Planungsmodul (40), das verantwortlich ist, um zu bestimmen, ob sich ein Konzentrationspunkt, der ein zukünftiges "Treffen" verursacht, bilden wird, und ein Handlungsbestimmungsmodul (44), um zu bestimmen, ob die Hilfskamera (26) des mehrpoligen Sensors (12) in der Lage ist, das "Treffen" zu verarbeiten, umfasst, wobei die Hilfskamera, die der Überwachungskamera (20) zu Hilfe kommt, die assoziierte Hilfskamera (22) ist, wenn der mehrpolige Sensor (12) ausreichende Ressourcen aufweist, damit mindestens eine assoziierte Hilfskamera (22) die Aufnahme des Konzentrationspunkts, der durch das Prognose- und Planungsmodul (40) gemeinsam mit der Überwachungskamera bestimmt ist, auslöst und wobei die Hilfskamera, die der Überwachungskamera (20) zu Hilfe kommt, mindestens eine Hilfskamera eines anderen mehrpoligen Sensors (14, 16 oder 18) ist, wenn die Ressourcen des mehrpoligen Sensors (12) nicht ausreichend sind, um das "Treffen" zu verarbeiten.

2. System gemäß Anspruch 1, bei dem der mehrpolige Sensor (12) einen Aufruf an die Hilfskameras eines anderen mehrpoligen Sensors macht, wenn seine eigenen Hilfskameras bereits mit der Verarbeitung von anderen Konzentrationspunkten beschäftigt sind, wobei sich die Hilfskameras des mehrpoligen Sensors auf den Konzentrationspunkt richten, sobald die Hilfskameras des anderen mehrpoligen Sensors die anderen Konzentrationspunkte übernommen haben.

3. System gemäß einem der Ansprüche 1 oder 2, wobei die mehrpoligen Sensoren (12, 14, 16, 18) untereinander über ein Hochgeschwindigkeitsnetz (32) wie etwa ein LAN-Netz von der Art Ethernet verbunden sind.

4. System gemäß Anspruch 3, wobei jeder der mehrpoligen Sensoren (12, 14, 16, 18) mit dem Hochgeschwindigkeitsnetz (32) über die Bestimmungsmittel oder den Dämon (30) angeschlossen ist, wobei der Dämon eine verteilte Software ist, die mit den sich in jedem der anderen mehrpoligen Sensoren befindenden Dämonen identisch ist und die die in dem mehrpoligen Sensor mittels der assoziierten Überwachungs- (20) und Hilfskameras (22) beschaffenen Daten an die Dämonen der anderen mehrpoligen Sensoren übermittelt.

5. System gemäß Anspruch 4, wobei eine Bildsteuerungs- und Bildverarbeitungseinheit (24 oder 26) mit jeder der Überwachungs- (20) oder Hilfskameras (22) des mehrpoligen Sensors assoziiert ist, mit dem Ziel, die Bedienung der Stellglieder der assoziierten Kamera vorzunehmen, beispielsweise des Zooms, und die durch die Kamera aufgenommenen Bilder zu beschaffen.

6. System gemäß Anspruch 5, das ferner einen Gesamtmodellierer (34), der mit den Voraussagungsmitteln (28), mit den Bestimmungsmitteln (30) und mit den Bildsteuerungs- und Bildverarbeitungseinheiten verbunden ist, umfasst, wobei der Gesamtmodellierer eine Basis von Kriterien zur Voraussagung von Verdeckungen und eine Basis von Kriterien und Handlungen zur Vorsorgeverarbeitung sowie Softwares zur mathematischen Modellierung der Kameras und eine Software zur Parametrisierung der betrachteten Szene, um Beschreibungen aller beweglichen und statischen Objekte und aller Ereignisse der Szene sowie auch der Spielregeln in der Form von von den mehrpoligen Sensoren gemeinsam genutzten Dateien zu erzeugen, umfasst.

7. System gemäß Anspruch 6, das ferner eine Datenbasis (36), die an das Hochgeschwindigkeitsnetz (32) angeschlossen ist, umfasst, wobei die Datenbasis die durch den Gesamtmodellierer (34) erzeugten Dateien sowie die Wiederherstellungsdaten speichert.
